# EUROPEAN PATENT SPECIFICATION

(11) **EP 2 211 257 B1**
(45) Date of publication and mention of the grant of the patent: **08.03.2017**
(21) Application number: 10150475.1
(22) Date of filing: 12.01.2010
(51) Int. Cl.: G06F 3/044

(54) **Touch screen panel**
Berührungsempfindlicher Bildschirm
Panneau d'écran tactile

(30) Priority: 16.01.2009 KR 20090003632
(43) Date of publication of application: 28.07.2010
(73) Proprietor: Samsung Display Co., Ltd., Gyeonggi-do (KR)
(72) Inventor: Kang, Sung-Ku, Ulju-gun, Ulsan (KR); Jung, Tae-Hyeog, Ulju-gun, Ulsan (KR); Huang, Seong-Je, Ulju-gun, Ulsan (KR); Lee, Chang-Yong, Ulju-gun, Ulsan (KR); Lee, Choon-Hyop, Ulju-gun, Ulsan (KR); Kim, Sang-Kook, Ulju-gun, Ulsan (KR); Park, Jung-Mok, Ulju-gun, Ulsan (KR); Kim, Shawn, Ulju-gun, Ulsan (KR); Jeong, Hwan-Hee, Ulju-gun, Ulsan (KR)
(74) Representative: Gulde & Partner

(56) References cited:
- EP-A1- 1 986 084
- WO-A2-2005/114369
- US-A1- 2007 181 878
- US-B1- 7 202 859

## Description

### BACKGROUND OF THE INVENTION

### 1. Field of the Invention

The present invention relates to a touch screen panel provided in an image display device.

### 2. Description of the Related Art

A touch screen panel is an input device capable of inputting a user's instructions by allowing the user to select content displayed on a screen of an image display device using the user's finger or a similar object.

To this end, the touch screen panel is provided on a front face of the image display device to convert information of a contact position that directly contacts the user's finger or similar object into an electrical signal. Therefore, the content selected at the contact position is received as an input signal.

US7,202,859 B1 discloses a capacitive sensing pattern comprising a plurality of spaced-apart X traces disposed along an X axis and a plurality of spaced apart Y traces disposed along a Y axis forming an intertwined pattern about each crossing. WO 2005/114369 A2 discloses a multipoint touchscreen with a transparent capacitive sensing medium configured to detect multiple touches at the same time and at distinct locations. US 2007/0181878 A1 discloses a transparent electrode featuring the interposition of a nano-metal layer between a grid electrode on a transparent substrate and an electroconductive polymer layer. EP 1 986 084 A1 discloses a conductor pattern of a capacitive touch panel with first and second axis conductor assemblies formed on a surface of a substrate. An insulation layer is formed on a surface of each first-axis conduction lines.

Since touch screen panels can replace an additional input device coupled to the image display device, such as a keyboard and/or a mouse, application of touch screen panels is gradually increasing.

When the touch screen panel is attached to the panel of the image display device, a size of the image display device increases, thereby reducing ease of portability.

### SUMMARY OF THE INVENTION

Accordingly, exemplary embodiments of the present invention provide a thinner touch screen panel.

In one exemplary embodiment of the present invention, there is provided a display apparatus, comprising a display panel; and an electrostatic capacitance touch screen panel, arranged above the display panel, the touch screen panel comprising: a transparent substrate; sensing patterns on a first surface of the transparent substrate, wherein the sensing patterns comprise first sensing patterns and second sensing patterns, the first sensing patterns being coupled to each other in a first direction, and the second sensing patterns being coupled to each other in a second direction that crosses the first direction. The first sensing patterns and second sensing patterns are provided on different layers, a first insulating layer interposed between the first sensing patterns and the second sensing patterns, and a second insulating layer on the second sensing patterns, wherein the first sensing patterns and second sensing patterns are adapted to change in electrostatic capacitance in accordance with a contact position of a contact object on a second surface of the transparent substrate opposite the first surface, and wherein the image displaying surface of the display apparatus is provided by the second surface of the transparent substrate.

The touch screen panel may further include a ground electrode layer on the insulating layer; and a first adhesive layer between the ground electrode layer and the insulating layer.

The touch screen panel may further include a buffer film between the first adhesive layer and the ground electrode layer.

The touch screen panel may further include a buffer film on the insulating layer. The buffer film may include a polymer including polyethylene terephthalate (PET).

The touch screen panel may further include an adhesive layer on the second surface of the transparent substrate; and an icon sheet on the adhesive layer. The icon sheet may include a polymer.

As described above, according to exemplary embodiments of the present invention, the transparent substrate of the touch screen panel is integrated with the window so that a thinner touch screen panel can be realized. That is, the transparent substrate is adapted to be contacted by a contact object.

In addition, the buffer film may be formed between the sensing patterns and the ground electrode layer of the touch screen panel, so that a highly sensitive touch screen panel with improved durability can be realized.

In addition, an icon sheet is attached onto the touch screen panel, so that a touch screen panel with a simplified printing process and improved durability can be realized.

In another embodiment, a display apparatus is provided, the display apparatus comprising a touch screen panel as discussed above and a display panel, arranged below the touch screen panel, wherein the image displaying surface of the display apparatus is provided by the surface of the touch screen panel adapted to be contacted by a contact object. The display apparatus is preferably arranged below the ground electrode layer of the touch screen panel.

In another embodiment, a display apparatus is provided, the display apparatus comprising a touch screen panel as discussed above and a display panel arranged below the ground electrode layer of the touch screen panel, wherein the image displaying surface of the display apparatus is formed by the surface of the touch screen panel opposite the ground electrode layer of the touch screen panel. The display apparatus is preferably arranged below the ground electrode layer of the touch screen panel.

In another embodiment, a display apparatus is provided, the display apparatus comprising a touch screen panel as discussed above and a display panel arranged below the ground electrode layer of the touch screen panel, wherein the image displaying surface of the display apparatus is formed by the second surface of the transparent substrate. The display apparatus is preferably arranged below the ground electrode layer of the touch screen panel.

In the present invention, owing to the fact that the sensor pattern of the touch screen panel is formed at the bottom of the substrate functioning as a window, the window substrate and the substrate where the sensor pattern of the touch screen panel is formed are integrated with each other, thereby making the touch screen panel thin and reducing the costs.

### BRIEF DESCRIPTION OF THE DRAWINGS

The accompanying drawings, together with the specification, illustrate exemplary embodiments of the present invention, and, together with the description, serve to explain the principles of the present invention.
FIG. 1 is a plan view schematically illustrating a touch screen panel according to an embodiment of the present invention;
FIG. 2 is a schematic cross-sectional view illustrating a main portion of a touch screen panel according to a first embodiment of the present invention;
FIG. 3 is a schematic cross-sectional view illustrating a main portion of a touch screen panel according to a second embodiment of the present invention;
FIG. 4 is a schematic cross-sectional view illustrating a main portion of a touch screen panel according to a third embodiment of the present invention; and
FIG. 5 is a schematic cross-sectional view illustrating a main portion of a touch screen panel according to a fourth embodiment of the present invention.

### DETAILED DESCRIPTION

In the following detailed description, only certain exemplary embodiments of the present invention have been shown and described by way of illustration. As those skilled in the art will recognize, the described embodiments may be modified in various different ways without departing from the scope of the present invention. Accordingly, the drawings and description are to be regarded as illustrative in nature and not restrictive. In addition, when an element is referred to as being "on" another element, it may be directly on another element, or may be indirectly on another element, with one or more intervening elements interposed there between. Also, when an element is referred to as being "coupled to" another element, it can be directly coupled to another element, or may be indirectly coupled to another element with one or more intervening elements coupled there between. Hereinafter, like reference numerals refer to like elements.

Embodiments of the present invention will be described in detail with reference to the accompanying drawings.

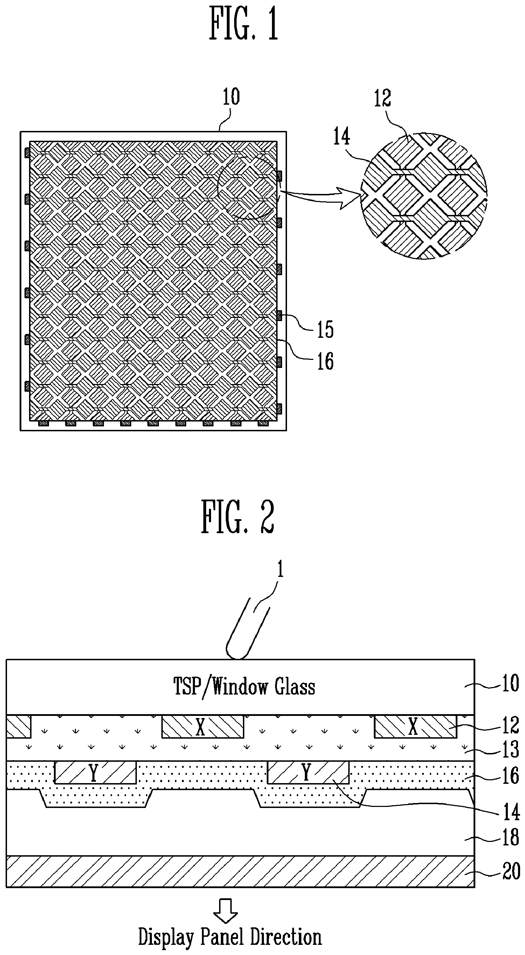

FIG. 1 is a plan view schematically illustrating a touch screen panel according to an embodiment of the present invention.

Referring to FIG. 1, the touch screen panel according to embodiments of the present invention includes a plurality of sensing patterns 12 and 14 formed on a transparent substrate 10, metal patterns 15 for coupling the sensing patterns 12 and 14 to position detecting lines (not shown), and an insulating layer 16 for covering the sensing patterns 12 and 14.

The sensing patterns 12 and 14 include X sensing patterns 12 and Y sensing patterns 14 arranged to cross each other, with X sensing patterns 12 having a same X coordinate (e.g., arranged in a same column) being coupled to each other by column, and with Y sensing patterns 14 having a same Y coordinate (e.g., arranged in a same row) being coupled to each other by row.

For example, the X sensing patterns 12 may include a plurality of X patterns formed so that sensing patterns having the same X coordinate in one column are coupled to each other in a first direction (e.g., the column direction). The Y sensing patterns 14 may include a plurality of Y patterns formed so that sensing patterns having the same Y coordinate in one row are coupled to each other in a second direction (e.g., the row direction).

The X and Y sensing patterns 12 and 14 may be formed on different layers with an additional insulating layer interposed there between.

In this case, in a patterning process, the X sensing patterns 12 are patterned to be coupled to each other in a first direction and the Y sensing patterns 14 are patterned to be coupled to each other in a second direction. Therefore, additional processes of forming contact holes and coupling patterns can be omitted, so that fewer masks are involved and the manufacturing process is simplified.

However, it should be noted that the aforementioned process is only an illustrative embodiment of the present invention, but the present invention is not limited thereto.

For example, the X and Y sensing patterns 12 and 14 may be formed on a same layer. In this case, one of the X and Y sensing patterns 12 and 14 are formed to be coupled to each other in one of first or second directions in the patterning process and the other one of the X and Y sensing patterns 12 and 14 are coupled to each other in the other one of the first or second directions in the processes of forming the contact holes and the coupling patterns.

The metal patterns 15 are arranged at edge regions of the X and Y sensing patterns 12 and 14 to couple the X and Y sensing patterns 12 and 14 to position detecting lines (not shown).

To be more specific, the metal patterns 15 electrically couple the X and Y sensing patterns 12 and 14 by column or row to the position detecting lines for determining a contact position detecting signal to be supplied to a driving circuit.

The insulating layer 16 is made of a transparent insulating material that covers the sensing patterns 12 and 14.

When a contact object, such as a user's finger or a touch stick, contacts a touch screen panel which is an electrostatic capacitance type touch screen panel, a change in electrostatic capacitance in accordance with a contact position is transmitted from the sensing patterns 12 and 14 to the driving circuit via the metal patterns 15 and the position detecting lines. The change in the electrostatic capacitance is converted into an electric signal by X and Y input processing circuits (not shown) so that the contact position can be detected.

According to an embodiment of the present invention, the sensing patterns 12 and 14 are arranged in a plane direction of a display panel (not shown). That is, in embodiments where the display panel is positioned under the touch screen panel, and where a contact surface is positioned at an upper surface of the touch screen panel, the sensing patterns 12 and 14 are formed under a transparent substrate 10. The upper surface of the transparent substrate 10 functions both as the contact surface that a contact object contacts and as the window of the display device.

That is, according to an embodiment of the present invention, an additional window is not provided, since the transparent substrate of the touch screen panel is integrated with the window, such that the transparent substrate may be contacted by a contact object. Therefore, the touch screen panel is thinner, manufacturing efficiency can be improved as manufacturing processes are simplified, and cost of materials can be reduced.

FIG. 2 is a schematic cross-sectional view illustrating a main portion of a touch screen panel according to a first embodiment of the present invention.

Referring to FIG. 2, the touch screen panel according to the first embodiment of the present invention includes sensing patterns 12 and 14 sequentially formed on one surface of a transparent substrate 10, a second insulating layer 16, a first adhesive layer 18, and a ground electrode layer 20.

Here, a surface of the transparent substrate 10 on which the sensing patterns 12 and 14, the second insulating layer 16, the first adhesive layer 18, and the ground electrode layer 20 are formed is a surface facing a display panel, for example, a lower surface. The other surface of the transparent substrate 10 faces a direction from which a contact object 1 comes into contact. That is, the transparent substrate 10 is integrated with the window.

The transparent substrate 10 is generally made of a material such as glass. However, the transparent substrate 10 may be made of a transparent material other than glass. Here, the term "transparent" refers not only to 100% transparency, but also generally high transmittance.

The sensing patterns 12 and 14 are alternately arranged on different layers with a first insulating layer 13 made of a transparent material interposed there between. However, the present invention is not limited thereto. For example, the sensing patterns 12 and 14 may be arranged on the same layer.

The sensing patterns 12 and 14 are made of a transparent electrode material such as indium tin oxide (ITO), so that light emitted from the display panel positioned under the touch screen panel can transmit through the touch screen panel.

The sensing patterns 12 and 14 are covered, preferably directly covered with the second insulting layer 16 made of a transparent material.

The first adhesive layer 18 is formed between, preferably directly between the second insulating layer 16 and the ground electrode layer 20 to adhere the second insulating layer 16 to the ground electrode layer 20. The first adhesive layer 18 is made of or consists of a transparent adhesive material having high transmittance. For example, the first adhesive layer 18 can be made of or consists of super view resin (SVR) and/or optical cleared adhesive (OCA).

The ground electrode layer 20 is made of or consists of a transparent electrode material such as ITO and faces the second insulating layer 16 with the first adhesive layer 18 interposed there between, preferably directly there between. The ground electrode layer 20 can be used for maintaining stability between the touch screen panel and the display panel, and can also be used for forming electrostatic capacitances with the sensing patterns 12 and 14 depending on a designing method of the touch screen panel.

That is, in an electrostatic capacitance type touch screen panel, electrostatic capacitances between the X and Y sensing patterns 12 and 14 and the ground electrode layer 20 can be utilized to sense a contact position.

On the other hand, the ground electrode layer 20 may not be provided in the touch screen panel, but may instead be provided on the surface of the display panel coupled to the touch screen panel.

According to the embodiment of the present invention having the above-described structure, the transparent substrate 10 of the touch screen panel and the window are integrated with each other, where contact objects can contact the transparent substrate 10.

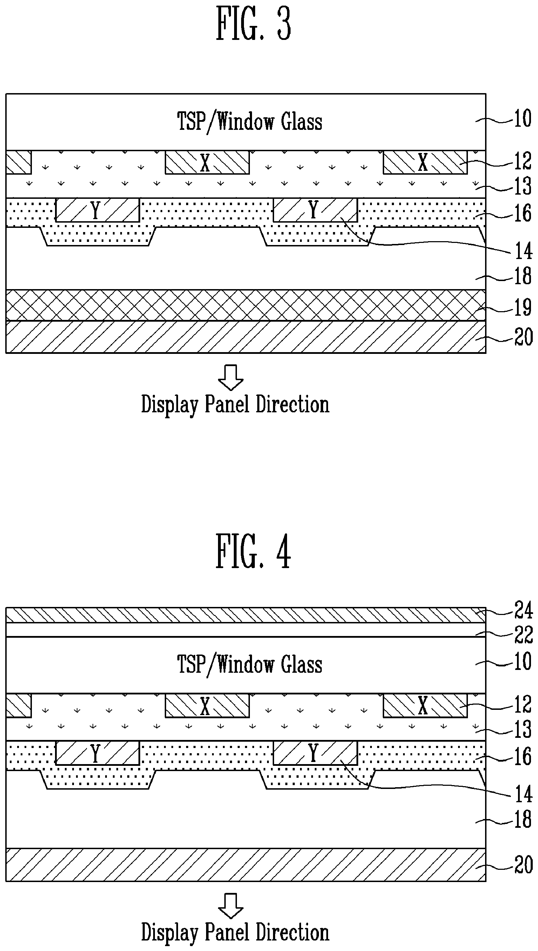

FIG. 3 is a schematic cross-sectional view illustrating a main portion of a touch screen panel according to a second embodiment of the present invention. In describing FIG. 3, the same elements as those of FIG. 2 are denoted by the same reference numerals, and detailed descriptions thereof will be omitted.

Referring to FIG. 3, the touch screen panel according to the second embodiment of the present invention further includes a buffer film 19 formed under, preferably directly under the second insulating layer 16.

To be more specific, the buffer film 19 is formed on, preferably directly on a lower surface (the surface that faces the display panel) of the first adhesive layer 18, between the first adhesive layer 18 and the ground electrode layer 20.

The buffer film 19 is made of or consists of a polymer material such as polyethylene terephthalate (PET) to improve the durability of the touch screen panel.

Furthermore, the buffer film 19 improves the sensitivity of the touch screen panel.

To be specific, when the buffer film 19 is provided, the distance between the sensing patterns 12 and 14 and the ground electrode layer 20 increases, such that the electrostatic capacitances formed between the sensing patterns 12 and 14 and the ground electrode layer 20 are reduced. Therefore, since the touch screen panel reacts more sensitively to contacts of similar degree, a highly sensitive touch screen panel can be realized.

FIG. 4 is a schematic cross-sectional view illustrating a main portion of a touch screen panel according to a third embodiment of the present invention. In describing FIG. 4, the same elements as those of FIG. 2 are denoted by the same reference numerals, and detailed descriptions thereof will be omitted.

Referring to FIG. 4, the touch screen panel according to the third embodiment of the present invention further includes a second adhesive layer 22 formed on, preferably directly on the contact surface of the transparent substrate 10, and an icon sheet 24 is formed on, preferably directly on the second adhesive layer 22.

The second adhesive layer 22 is made of a transparent adhesive material, such as SVR and/or OCA having high transmittance, and attaches the icon sheet 24 to the transparent substrate 10.

The icon sheet 24 is positioned on, preferably directly on the surface of the touch screen panel and is made of a material that facilitates printing such as logos and frame decorations.

In addition, the icon sheet 24 can be made of a polymer material such as PET. That is, the icon sheet 24 is made of or consists of the buffer film material to improve the durability of the touch screen panel.

According to the third embodiment of the present invention, the icon sheet 24 is attached to the touch screen panel, so that a touch screen panel with a simplified printing process and with improved durability can be realized.

Meanwhile, a touch screen panel may be provided with more than just one of the buffer film 19 of FIG. 3 or the icon sheet 24 of FIG. 4.

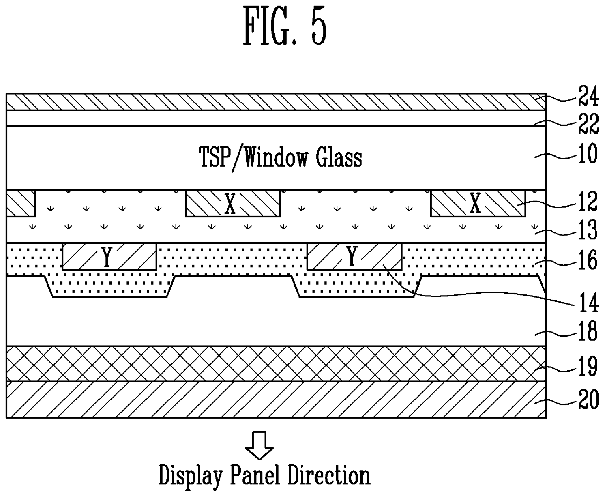

For example, as illustrated in FIG. 5, both a buffer film 19 in a lower part of the touch screen panel and an icon sheet 24 in an upper part of the touch screen panel can be provided.

In the touch screen panel according to the fourth embodiment of the present invention as illustrated in FIG. 5, a touch screen panel with improved durability and sensitivity and a simplified printing process can be realized.

While the present invention has been described in connection with certain exemplary embodiments, it is to be understood that the invention is not limited to the disclosed embodiments, but is instead intended to cover various modifications and equivalent arrangements included within the scope of the appended claims, and equivalents thereof.

## Claims

1. A display apparatus, comprising:
a display panel; and
an electrostatic capacitance touch screen panel, arranged above the display panel, the touch screen panel comprising:
a transparent substrate (10);
sensing patterns (12, 14) on a first surface of the transparent substrate (10), wherein the sensing patterns (12, 14) comprise first sensing patterns (12) and second sensing patterns (14), the first sensing patterns (12) being coupled to each other in a first direction (X), and the second sensing patterns (14) being coupled to each other in a second direction (Y) that crosses the first direction (X);
**characterized in that**
the first sensing patterns (12) and second sensing patterns (14) are provided on different layers,
a first insulating layer (13) interposed between the first sensing patterns (12) and the second sensing patterns (14), and
a second insulating layer (16) on the second sensing patterns (14), wherein the first sensing patterns (12) and second sensing patterns (14) are adapted to change in electrostatic capacitance in accordance with a contact position of a contact object (1) on a second surface of the transparent substrate (10) opposite the first surface, and wherein
the image displaying surface of the display apparatus is provided by the second surface of the transparent substrate.

2. The display apparatus as claimed in claim 1, wherein the touch screen panel further comprises:
a ground electrode layer (20) on the insulating layer (16); and
a first adhesive layer (18) between the ground electrode layer (20) and the insulating layer (16).

3. The display apparatus as claimed in claim 2, wherein the touch screen panel further comprises a buffer film (19) between the first adhesive layer (18) and the ground electrode layer (20).

4. The display apparatus as claimed in claim 3, wherein the touch screen panel further comprises:
a second adhesive layer (22) on the second surface of the transparent substrate (10); and
an icon sheet (24) on the second adhesive layer (22).

5. The display apparatus as claimed in claim 4, wherein the buffer film (19) comprises a polymer, and wherein the icon sheet (24) comprises the same polymer as the buffer film (19).

6. The display apparatus as claimed in claim 1, wherein the touch screen panel further comprises a buffer film (19) on the insulating layer (16).

7. The display apparatus as claimed in claim 6, wherein the buffer film (19) comprises a polymer comprising polyethylene terephthalate (PET).

8. The display apparatus as claimed in claim 1, wherein the touch screen panel further comprises:
an adhesive layer (22) on the second surface of the transparent substrate; and
an icon sheet (24) on the adhesive layer (22).

9. The display apparatus as claimed in claim 8, wherein the icon sheet (24) comprises a polymer.

10. The display apparatus as claimed in claim 1, wherein the first direction (X) is substantially a column direction, and wherein the second direction (Y) is substantially a row direction.

11. The display apparatus as claimed in claim 1, wherein the touch screen panel is configured to generate an electric signal including information of a contact position on the second surface of the transparent substrate (10) corresponding to a change in electrostatic capacitance at the contact position.

12. The display apparatus as claimed in claim 1, wherein the transparent substrate (10) of the touch screen panel comprises indium tin oxide.

13. The display apparatus as claimed in claim 1, wherein a separate window configured to be contacted is not provided.

## Patentansprüche

1. Anzeigevorrichtung, umfassend:
ein Anzeigefeld und
einen über dem Anzeigefeld angeordneten berührungsempfindlichen Bildschirm mit elektrostatischer Kapazität, wobei der berührungsempfindliche Bildschirm Folgendes umfasst:
ein transparentes Substrat (10);
Erfassungsmuster (12, 14) auf einer ersten Fläche des transparenten Substrats (10), wobei die Erfassungsmuster (12, 14) erste Erfassungsmuster (12) und zweite Erfassungsmuster (14) umfassen, wobei die ersten Erfassungsmuster (12) in einer ersten Richtung (X) miteinander gekoppelt sind und die zweiten Erfassungsmuster (14) in einer die erste Richtung (X) kreuzenden zweiten Richtung (Y) miteinander gekoppelt sind;
**dadurch gekennzeichnet, dass**
die ersten Erfassungsmuster (12) und zweiten Erfassungsmuster (14) auf unterschiedlichen Schichten bereitgestellt sind,
eine erste Isolierschicht (13), die zwischen dem ersten Erfassungsmuster (12) und dem zweiten Erfassungsmuster (14) angeordnet ist, und
eine zweite Isolierschicht (16) auf den zweiten Erfassungsmustern (14), wobei die ersten Erfassungsmuster (12) und zweiten Erfassungsmuster (14) angepasst sind, die elektrostatische Kapazität gemäß einer Kontaktposition eines Kontaktobjekts (1) auf einer der ersten Fläche gegenüberliegenden zweiten Fläche des transparenten Substrats (10) zu ändern, und wobei
die Bildanzeigefläche der Anzeigevorrichtung durch die zweite Fläche des transparenten Substrats bereitgestellt ist.

2. Anzeigevorrichtung nach Anspruch 1, wobei der berührungsempfindliche Bildschirm ferner Folgendes umfasst:
eine Masseelektrodenschicht (20) auf der Isolierschicht (16) und
eine erste Haftschicht (18) zwischen der Masseelektrodenschicht (20) und der Isolierschicht (16).

3. Anzeigevorrichtung nach Anspruch 2, wobei der berührungsempfindliche Bildschirm ferner einen Pufferfilm (19) zwischen der ersten Haftschicht (18) und der Masseelektrodenschicht (20) umfasst.

4. Anzeigevorrichtung nach Anspruch 3, wobei der berührungsempfindliche Bildschirm ferner Folgendes umfasst:
eine zweite Haftschicht (22) auf der zweiten Fläche des transparenten Substrats (10) und
eine Piktogrammtafel (24) auf der zweiten Haftschicht (22).

5. Anzeigevorrichtung nach Anspruch 4, wobei der Pufferfilm (19) ein Polymer umfasst und wobei die Piktogrammtafel (24) dasselbe Polymer wie der Pufferfilm (19) umfasst.

6. Anzeigevorrichtung nach Anspruch 1, wobei der berührungsempfindliche Bildschirm ferner einen Pufferfilm (19) auf der Isolierschicht (16) umfasst.

7. Anzeigevorrichtung nach Anspruch 6, wobei der Pufferfilm (19) ein Polyethylenterephthalat (PET) umfassendes Polymer umfasst.

8. Anzeigevorrichtung nach Anspruch 1, wobei der berührungsempfindliche Bildschirm ferner Folgendes umfasst:
eine Haftschicht (22) auf der zweiten Fläche des transparenten Substrats und
eine Piktogrammtafel (24) auf der Haftschicht (22).

9. Anzeigevorrichtung nach Anspruch 8, wobei die Piktogrammtafel (24) ein Polymer umfasst.

10. Anzeigevorrichtung nach Anspruch 1, wobei die erste Richtung (X) im Wesentlichen eine Spaltenrichtung ist und wobei die zweite Richtung (Y) im Wesentlichen eine Zeilenrichtung ist.

11. Anzeigevorrichtung nach Anspruch 1, wobei der berührungsempfindliche Bildschirm gestaltet ist, ein elektrisches Signal zu erzeugen, das Informationen über eine Kontaktposition auf der zweiten Fläche des transparenten Substrats (10) beinhaltet und einer Änderung der elektrostatischen Kapazität an der Kontaktposition entspricht.

12. Anzeigevorrichtung nach Anspruch 1, wobei das transparente Substrat (10) des berührungsempfindlichen Bildschirms Indiumzinnoxid umfasst.

13. Anzeigevorrichtung nach Anspruch 1, wobei kein separates, zu kontaktierendes Fenster bereitgestellt ist.

## Revendications

1. Appareil d'affichage, comprenant :
un panneau d'affichage ; et
un panneau d'écran tactile à capacité électrostatique, agencé au-dessus du panneau d'affichage, le panneau d'écran tactile comprenant :
un substrat transparent (10) ;
des motifs de détection (12, 14) sur une première surface du substrat transparent (10), les motifs de détection (12, 14) comprenant des premiers motifs de détection (12) et des deuxièmes motifs de détection (14), les premiers motifs de détection (12) étant couplés les uns aux autres dans une première direction (X), et les deuxièmes motifs de détection (14) étant couplés les uns aux autres dans une deuxième direction (Y) qui croise la première direction (X) ;
**caractérisé en ce que** :
les premiers motifs de détection (12) et les deuxièmes motifs de détection (14) sont prévus sur différentes couches,
une première couche isolante (13) interposée entre les premiers motifs de détection (12) et les deuxièmes motifs de détection (14), et
une deuxième couche isolante (16) sur les deuxièmes motifs de détection (14),
dans lequel les premiers motifs de détection (12) et les deuxièmes motifs de détection (14) sont adaptés pour modifier la capacité électrostatique en fonction d'une position de contact d'un objet de contact (1) sur une deuxième surface du substrat transparent (10) opposée à la première surface, et
la surface d'affichage d'image de l'appareil d'affichage étant fournie par la deuxième surface du substrat transparent.

2. Appareil d'affichage tel que revendiqué dans la revendication 1, dans lequel le panneau d'écran tactile comprend en outre :
une couche d'électrode de masse (20) sur la couche isolante (16) ; et
une première couche adhésive (18) entre la couche d'électrode de masse (20) et la couche isolante (16).

3. Appareil d'affichage tel que revendiqué dans la revendication 2, dans lequel le panneau d'écran tactile comprend en outre un film tampon (19) entre la première couche adhésive (18) et la couche d'électrode de masse (20).

4. Appareil d'affichage tel que revendiqué dans la revendication 3, dans lequel le panneau d'écran tactile comprend en outre :
une deuxième couche adhésive (22) sur la deuxième surface du substrat transparent (10) ; et
une feuille d'icône (24) sur la deuxième couche adhésive (22).

5. Appareil d'affichage tel que revendiqué dans la revendication 4, dans lequel le film tampon (19) comprend un polymère, et dans lequel la feuille d'icône (24) comprend le même polymère que le film tampon (19).

6. Appareil d'affichage tel que revendiqué dans la revendication 1, dans lequel le panneau d'écran tactile comprend en outre un film tampon (19) sur la couche isolante (16).

7. Appareil d'affichage tel que revendiqué dans la revendication 6, dans lequel le film tampon (19) comprend un polymère comprenant du polytéréphtalate d'éthylène (PET).

8. Appareil d'affichage tel que revendiqué dans la revendication 1, dans lequel le panneau d'écran tactile comprend en outre :
une couche adhésive (22) sur la deuxième surface du substrat transparent ; et
une feuille d'icône (24) sur la couche adhésive (22).

9. Appareil d'affichage tel que revendiqué dans la revendication 8, dans lequel la feuille d'icône (24) comprend un polymère.

10. Appareil d'affichage tel que revendiqué dans la revendication 1, dans lequel la première direction (X) est sensiblement une direction de colonne, et dans lequel la deuxième direction (Y) est sensiblement une direction de rangée.

11. Appareil d'affichage tel que revendiqué dans la revendication 1, dans lequel le panneau d'écran tactile est configuré pour générer un signal électrique comportant des informations d'une position de contact sur la deuxième surface du substrat transparent (10) correspondant à un changement de capacité électrostatique au niveau de la position de contact.

12. Appareil d'affichage tel que revendiqué dans la revendication 1, dans lequel le substrat transparent (10) du panneau d'écran tactile comprend de l'oxyde d'indium et d'étain.

13. Appareil d'affichage tel que revendiqué dans la revendication 1, dans lequel une fenêtre séparée configurée pour être mise en contact n'est pas fournie.
